Europäisches Patentamt

European Patent Office

Office européen des brevets

(11) Veröffentlichungsnummer : **0 019 928**
**B1**

# (12) EUROPÄISCHE PATENTSCHRIFT

(45) Veröffentlichungstag der Patentschrift :
22.09.82

(21) Anmeldenummer : 80103034.7

(22) Anmeldetag : 31.05.80

(51) Int. Cl.³ : **B 01 D 37/02**, B 01 D 23/04//
C02F1/24

(54) Verfahren zur Fest-Flüssigtrennung.

(30) Priorität : 05.06.79 DE 2922778

(43) Veröffentlichungstag der Anmeldung :
10.12.80 (Patentblatt 80/25)

(45) Bekanntmachung des Hinweises auf die Patenterteilung : 22.09.82 Patentblatt 82/38

(84) Benannte Vertragsstaaten :
AT BE CH DE FR GB IT LI LU NL SE

(56) Entgegenhaltungen :
DE A 2 625 690
DE B 1 584 878
DE B 1 658 055
DE B 2 621 698
FR A 2 247 270

(73) Patentinhaber : HOECHST AKTIENGESELLSCHAFT
Postfach 80 03 20
D-6230 Frankfurt/Main 80 (DE)

(72) Erfinder : Disselbeck, Dieter
Am Rehsteig 3
D-6232 Bad Soden am Taunus (DE)
Erfinder : Richter, Rudolf
Friedenstrasse 18
D-6274 Hünstetten (DE)

Verfahren zur Fest-Flüssigtrennung

In der DE-A 26 21 698 wird eine Vorrichtung zum Reinigen von Abwasser mit einem in einer Halterung befestigten Gewebe beschrieben, wobei das Gewebe sackartig ist und als hängendes Stützgewebe für eine an seiner inneren Oberfläche gebildete primäre Filterschicht aus abgetrennten Feststoffen ausgebildet ist.

Der mit dieser Vorrichtung erreichbare Abscheidegrad bzw. Reinigungseffekt hinsichtlich des Feststoffgehalts im Filtrat wird von der Art der Ausbildung der primären Filterschicht oder Anschwemmfilterschicht am Gewebe beeinflußt. Der Erfindung liegt nun die Aufgabe zugrunde, die optimale Ausbildung der Anschwemmfilterschicht in jeder Phase des Filtriervorgangs sicherzustellen.

Erfindungsgemäß wird die Aufgabe dadurch gelöst, daß dem zu trennenden Medium vor dem Einleiten in das Filterelement ein Gas in Form feiner bis feinster Blasen zugeführt wird. Überraschenderweise flotieren dadurch die Feststoffe des zu trennenden Mediums im Filterelement und bilden auf der Oberfläche der Flüssigkeitssäule eine Schlammschicht. Diese Schlammschicht wächst selbsttätig mit steigender Flüssigkeitssäule an der Innenseite des wasserdurchlässigen Stützgewebes als Anschwemmfilterschicht auf.

Mit Hilfe des neuen Verfahrens ist es möglich, Abwässer, die nicht mit Flockungsmitteln konditioniert sind, sowie feststoffhaltige Flüssigkeiten jedweder Art mit oder ohne Flockungsmittel zu behandeln.

Gegenstand der Erfindung ist daher ein Verfahren zur Fest-Flüssigtrennung mittels Schwerkraft und einem dreidimensionalen Filterelement, in dessen Inneren sich eine Säule aus dem zu trennenden Medium bildet, und einer an der Innenfläche des Filterelements haftenden, aus abgetrennten Feststoffen gebildeten Anschwemmfilterschicht, ohne Mitverwendung eines Filterhilfsmittels, das dadurch gekennzeichnet ist, daß dem zu trennenden Medium vor dem Einleiten in das Filterelement ein Gas in Form feiner bis feinster Blasen zugeführt wird, wobei die Feststoffe auf der Oberfläche der Säule des zu trennenden Mediums eine Schicht bilden, aus der sich dann die Anschwemmfilterschicht bildet.

Weiterhin hat es sich gezeigt, daß mit Hilfe des Verfahrens im allgemeinen der Einsatz von Gewebe hoher Porosität, vorzugsweise mit einer Durchlässigkeit von bis zu 1 000 l/dm² min. Luft bei einem Differenzdruck von 2 mbar möglich ist. Aber auch der Einsatz perforierter Flächengebilde aus geeigneten Materialien, die zu sackartigen Elementen verarbeitet sind, ist möglich.

Als Materialien für Gewebe und perforierte Flächengebilde eignen sich solche aus synthetischen Materialien, die eine hohe Festigkeit und Beständigkeit gegen aggressive Stoffe sowie Haltbarkeit besitzen. Besonders vorteilhaft eignen sich Gewebe aus Filament- und/oder Fasergarnen aus Synthesefasern (Multi- und/oder Monofilament). Besonders vorteilhaft eignen sich solche aus Fäden aus Polyestern, wie Polyäthylenterephthalat, Polybutylenterephthalat, Poly-1,4-dimethylolcyclohexan-terephthalat bzw. analogen Produkten auf Basis von Isophthalsäure, Polyamiden wie Poly-(hexamethylenadipinsäureamid), Polyhexamethylensebacinsäureamid, Polyundecansäureamid, Polycaprolactam, ferner aus Poly-p-phenylenterephthalamid. Geeignet sind auch Gewebe aus Polyacrylnitril und aus Copolymeren von Acrylnitril und wenigstens einem weiteren Monomeren, deren Acrylnitrilgehalt wenigstens 85 % beträgt. Auch perforierte Flächengebilde aus Polyäthylen, Polypropylen und aus Folien aus Polyestern sind geeignet.

Das zur Durchführung des erfindungsgemäßen Verfahrens verwendete Gas ist vorzugsweise Luft, wobei jedoch je nach Art des zu trennenden Mediums auch andere Gase, wie Sauerstoff, Stickstoff und Kohlendioxid eingesetzt werden können. Gasförminger Stickstoff und Kohlendioxid werden beispielsweise vorteilhaft als inertes Gas bei der Behandlung oxidationsempfindlicher Medien eingesetzt, wobei sich in diesem Falle unter Umständen das Arbeiten in geschlossenen Systemen empfiehlt. Die letztere Arbeitsweise wird vorzugsweise auch dann angewandt, wenn das zu trennende Medium Stoffe enthält, die beim Verdunsten in Gegenwart von Sauerstoff explosive Gemische bilden.

Die angesaugte Gasmenge soll mindestens so groß sein, daß ein Auftrieb der Teilchen möglich ist, und andererseits nicht so groß sein, daß die Förderleistung der Förderung zu stark abfällt. Daher ist es erforderlich, daß die benötigte Gasmenge in Form feiner und feinster Bläschen im Medium vorliegt. Die verschiedenen Größen der Anlagen und die zu trennenden Medien haben einen Einfluß auf die benötigte Gasmenge. Daher muß die optimal benötigte Gasmenge fallweise auf die Anlage eingestellt werden. Die Gaszufuhr erfolgt aus diesem Grund vorzugsweise im Ansaugbereich der Förderpumpe für das Medium, wobei z.B. sogenannte Schnüffelventile oder Fritten, die eine kontrollierte Gasansaugung ermöglichen, im Ansaugbereich angeordnet sind. Durch Injektorwirkung wird das Gas mitgerissen, lagert sich an die Feststoffe an und bewirkt die Flotation.

Wenn bei der Behandlung des zu trennenden Mediums Flokkungsmittel eingesetzt werden, wie es zum Beispiel bei Abwässern mitunter zweckmäßig ist, hat es sich als vorteilhaft erwiesen, das Gas vor der Zudosierungsstelle der Flockungsmittel zuzuführen, wodurch vielfach zusätzlich auch der Ausflockungseffekt verstärkt wird.

Das Verfahren läßt sich auf die verschiedenartigsten Fest-Flüssig-Systeme anwenden, wie feststoffhaltige Abwässer und Schlämme, z.B. alle Arten von kommunalen Abwässern und Klärschlämmen, wie Frisch- oder Faulschlämme, Abwässer und Schlämme der Industrie, z.B. aus Schlachthäusern, Hühnerfarmen, Molkereien, Frucht- und Gemüseverwertungsanlagen, Eisenbahnreparaturbetrieben, Galvanik- und Hydroxydschlämme und -Abwässer und solche aus der steinverarbeitenden Industrie, aus Hüttenwerken, der Öl gewinnenden oder verarbeitenden Industrie, der Kohleindustrie, der Papierindustrie, der Zuckerindustrie, der Span- und Holzfaserplatten-Fabrikation, aus Keltereien, und aus Schleifereien der verschiedenen Industrien. Es läßt sich ferner bei der Reinigung natürlicher Oberflächenwasser, die durch einen Gehalt an Feststoffen verschmutzt sind, anwenden.

Von den angeführten feststoffhaltigen Abwässern und Schlämmen wird Abwasser besonders bevorzugt.

Beispiel

In einer Filteranlage zur Reinigung von Abwasser wurde ein Schnüffelventil in die Ansaugleitung der Pumpe, die das Abwasser in die Filterelemente förderte, eingebaut. Die durch das Schnüffelventil angesaugte und dem Abwasserstrom zugeführte Luft lagerte sich in Form von Luftperlen an die Feststoffteilchen an. Die mit Luft beladenen Feststoffteilchen schwommen rasch im Filterelement auf und schlossen die Flüssigkeitssäule mit einer Schlammschicht ab. Diese Schlammschicht wuchs bei steigender Flüssigkeitssäule selbsttätig an der Innenseite des verwendeten wasserdurchlässigen Stützgewebes auf und bildete eine Anschwemmfilterschicht. Das eingesetzte Abwasser hatte einen hatte einen Feststoffgehalt von 0,44 g/l und einen biologischen Sauerstoffbedarf (BSB$_5$-Wert) von 360 mg/l, während das Filtrat nach der Behandlung einen Feststoffgehalt von 0,02 g/l und einen BSB$_5$-Wert von 77 mg/l aufwies.

Vergleichsbeispiel

Der obige Versuch wurde wiederholt, wobei jedoch dem Abwasser keine Luft zugeführt wurde. Der Vorgang des Aufschwimmens der Feststoffteilchen konnte nicht beobachtet werden. Das erhaltene Filtrat besaß einen Feststoffgehalt von 0,086 g/l und einen BSB$_5$-Wert von 120 mg/l.

Durch die Anwendung des Verfahrens wurde ein höherer Abscheidungsgrad bezüglich des Feststoffgehaltes und eine erhöhte Elimination des biologischen Sauerstoffbedarf erzielt.

**Ansprüche**

1. Verfahren zur Fest-Flüssigtrennung mittels Schwerkraft und einem dreidimensionalen Filterelement, in dessen Inneren sich eine Säule aus dem zu trennenden Medium bildet, und einer an der Innenfläche des Filterelements haftenden, aus abgetrennten Feststoffen gebildeten Anschwemmfilterschicht, ohne Mitverwendung eines Filterhilfsmittels, dadurch gekennzeichnet, daß dem zu trennenden Medium vor dem Einleiten in das Filterelement ein Gas in Form feiner bis feinster Blasen zugeführt wird, wobei die Feststoffe auf der Oberfläche der Säule des zu trennenden Mediums eine Schicht bilden, aus der sich dann die Anschwemmfilterschicht bildet.

2. Verfahren nach Anspruch 1, dadurch gekennzeichnet, daß als Gas Luft verwendet wird.

3. Verfahren nach Anspruch 1, dadurch gekennzeichnet, daß inerte Gase bei oxidationsempfindlichen oder explosive Gemische bildenden Medien zugeführt werden.

4. Verfahren nach einem oder mehreren der Ansprüche 1 bis 3, dadurch gekennzeichnet, daß die Gaszufuhr im Ansaugbereich der Förderpumpe für das zu trennende Medium erfolgt.

5. Verfahren nach einem oder mehreren der Ansprüche 1 bis 4, dadurch gekennzeichnet, daß feststoffhaltige Flüssigkeiten, denen keine Flockungsmittel zugesetzt sind, der Trennung unterworfen werden.

6. Verfahren nach einem oder mehreren der Ansprüche 1 bis 5, dadurch gekennzeichnet, daß Abwässer der Trennung unterworfen werden.

7. Verfahren nach einem ober mehreren der Ansprüche 1-5 dadurch gekennzeichnet, daß natürliches Oberflächenwasser gereinigt wird.

**Claims**

1. Solid-liquid separation process by means of gravity and a three-dimensional filter element, in the inner part of which a column of the medium to be separated is formed, and a filter layer adhering to the internal surface of the filter element which layer has been formed from separated solids, without using a filter aid agent, characterized in that a gas is fed in the form of fine to finest bubbles to the medium to be separated before this medium is introduced into the filter element, whereby a layer of the separated solids is formed at the surface of the column of the medium to be separated from which layer the filter layer is then formed.

2. Process according to claim 1, characterized in that air is used as gas.

3. Process according to claim 1, characterized in that inert gases are fed to media which are sensitive to oxygen or form explosive mixtures.

4. Process according to one or more of claims 1 to 3, characterised in that the gas is supplied in the suction zone of the conveyor pump for the medium to be separated.

5. Process according to one or more of claims 1 to 4, characterized in that solid containing liquids to which no flocculating agents have been added are subjected to the separation.

6. Process according to one or more of claims 1 to 5, characterized in that waste waters are subjected to the separation.

7. Process according to one or more of claims 1 to 6, characterized in that natural surface water is purified.

**Revendications**

1. Procédé de séparation solide-liquide par gravité avec un élément filtrant tridimensionnel à l'intérieur duquel il se forme une colonne du milieu à séparer, et une couche filtrante de matières solides séparées déposées à la surface interne de l'élément filtrant (couche dite couche filtrante alluvionnaire), sans adjuvant de filtration, procédé caractérisé en ce que, avant d'amener le milieu à séparer à l'élément filtrant, on fait arriver dans ce milieu un gaz en bulle fines à très fines, les matières solides formant ainsi, à la surface de la colonne du milieu à séparer, une couche à partir de laquelle se forme ensuite la couche filtrante alluvionnaire.

2. Procédé selon la revendication 1, caractérisé en ce que le gaz employé est de l'air.

3. Procédé selon la revendication 1, caractérisé en ce que l'on fait arriver des gaz inertes dans le cas de milieux sensibles à l'oxydation ou pouvant former des mélanges explosifs.

4. Procédé selon l'une quelconque des revendications 1 à 3, caractérisé en ce que l'arrivée de gaz a lieu du côté aspiration de la pompe de circulation du milieu à traiter.

5. Procédé selon l'une quelconque des revendications 1 à 4, caractérisé en ce que l'on soumet à la séparation des liquides contenant des matières solides, auxquels n'a été ajouté aucun agent de floculation.

6. Procédé selon l'une quelconque des revendications 1 à 5, caractérisé en ce que l'on soumet des eaux résiduaires à la séparation.

7. Procédé selon l'une quelconque des revendications 1 à 5, caractérisé en ce que l'on purifie une eau naturelle de surface.